# EUROPEAN PATENT APPLICATION

(11) **EP 3 088 686 A1**
(43) Date of publication of application: **02.11.2016**
(21) Application number: 16164109.7
(22) Date of filing: 06.04.2016
(51) Int. Cl.: F01D 25/18, F01D 25/20, F02C 7/06

(54) **CONTROLLER MODULATED OIL SYSTEM FOR A GAS TURBINE PROPULSION SYSTEM**

(30) Priority: 28.04.2015 US 201562153804 P
(71) Applicant: Rolls-Royce Corporation, Indianapolis, Indiana 46225 (US)
(72) Inventor: Zeller, Robert, Noblesville, Indiana 46062 (US)
(74) Representative: Rolls-Royce plc

(57) **Abstract**

Technologies for controlling a lubrication subsystem of a gas turbine propulsion system are disclosed herein. The propulsion system includes several distributed lubricant pumps. Each lubricant pump is coupled to a lubricant circuit that includes a corresponding lubricated component of the propulsion system. The lubricated components may include engine bearing sumps or heat exchangers. The propulsion system includes a propulsion system controller coupled to the lubricant pumps. The propulsion system controller receives input data indicative of a current operating condition of the propulsion system, determines pump control settings based on the current operating condition, and controls each of the lubricant pumps according to a corresponding pump control setting. The propulsion system controller may detect that a lubricant pump has failed and redirect a lubricant circuit corresponding to the failed lubricant pump. The input data may be indicative of lubricant flow rate, pressure, temperature, engine load, or electrical power generation load.

## Description

The present disclosure relates generally to control systems used in gas turbine propulsion systems, and more specifically to control of an oil subsystem used for lubrication and cooling of the propulsion system.

Gas turbine propulsion systems are used to power aircraft, watercraft, power generators, and the like. A typical gas turbine propulsion system includes a gas turbine engine subsystem, an electrical power generation subsystem, a thermal management subsystem, and a lubrication subsystem.

Gas turbine engine subsystems generally include a compressor, a combustor, and a turbine. The compressor compresses air drawn into the engine and delivers high pressure air to the combustor. In the combustor, fuel is mixed with the high pressure air and is ignited. Products of the combustion reaction in the combustor are directed into the turbine where work is extracted to drive the compressor and, sometimes, an output shaft. The output shaft may drive other subsystems of the propulsion system, including the electrical power generation subsystem. Left-over products of the combustion are exhausted out of the turbine and may provide thrust in some applications.

Typical lubrication subsystems include a lubricant pump that circulates oil to various sumps of the propulsion system on a set schedule and/or flow rate. The lubricant pump may be mechanically driven by an engine gearbox of the engine subsystem. Certain lubrication subsystems may include individual sub-circuits to distribute lubricant to individual bearing sumps and other locations throughout the engine on a set schedule and/or flow rate.

The present disclosure may comprise one or more of the following features and combinations thereof.

A gas turbine engine propulsion system may include a plurality of lubricant pumps, a plurality of lubricant circuits, and a propulsion system controller. Each of the plurality of lubricant circuits includes a corresponding lubricated component of the propulsion system and is coupled to a corresponding lubricant pump. The propulsion system controller is configured to receive input data indicative of a current operating condition of the propulsion system, determine a plurality of pump control settings based on the current operating condition, and control each of the plurality of lubricant pumps according to a corresponding pump control setting of the plurality of pump control settings.

In some embodiments, the input data indicative of the current operating condition of the propulsion system may include input data indicative of a lubricant flow rate, a lubricant pressure, or a lubricant temperature of the propulsion system. In some embodiments, the input data indicative of the current operating condition of the propulsion system may include input data indicative of an engine subsystem load or an electrical power generation subsystem load of the propulsion system.

In some embodiments, the propulsion system may further include a gas turbine engine bearing, wherein a corresponding lubricated component of the propulsion system includes the gas turbine engine bearing. In some embodiments, the propulsion system may further include a heat exchanger, wherein a corresponding lubricated component of the propulsion system includes the heat exchanger.

In some embodiments, the propulsion system control may be further configured to receive input data indicative of a pre-programmed operating condition of the propulsion system, and determine the plurality of pump control settings based on the pre-programmed operating condition. In some embodiments, to determine the plurality of pump control settings based on the current operating condition may include to determine a pump control setting for a corresponding lubricant pump to achieve a target lubricant flow rate, a target lubricant pressure, or a target lubricant temperature.

In some embodiments, the propulsion system controller may be further configured to determine whether a lubricant pump of the plurality of lubricant pumps has failed, and, in response to a determination that a lubricant pump has failed, control a valve of the propulsion system to redirect a lubricant circuit associated with the failed lubricant pump to provide lubricant to the corresponding lubricated component.

According to another aspect of the present disclosure, a method for controlling a lubrication subsystem of a gas turbine engine propulsion system may include receiving, by a propulsion system controller, input data indicative of a current operating condition of the propulsion system; determining, by the propulsion system controller, a plurality of pump control settings based on the current operating condition; and controlling, by the propulsion system controller, each of a plurality of lubricant pumps of the propulsion system according to a corresponding pump control setting of the plurality of pump control settings, wherein each of the plurality of lubricant pumps is coupled to a corresponding lubricant circuit of the propulsion system and each lubricant circuit includes a corresponding lubricated component of the propulsion system.

In some embodiments, receiving the input data indicative of the current operating condition of the propulsion system may include receiving input data indicative of a lubricant flow rate, a lubricant pressure, or a lubricant temperature of the propulsion system. In some embodiments, receiving the input data indicative of the current operating condition of the propulsion system may include receiving input data indicative of an engine subsystem load or an electrical power generation subsystem load of the propulsion system.

In some embodiments, the method may further include receiving, by the propulsion system controller, input data indicative of a pre-programmed operating condition of the propulsion system; and determining, by the propulsion system controller, the plurality of pump control settings based on the pre-programmed operating condition. In some embodiments, determining the plurality of pump control settings based on the current operating condition may include determining a pump control setting for a corresponding lubricant pump to achieve a target lubricant flow rate, a target lubricant pressure, or a target lubricant temperature.

In some embodiments, the method may further include determining, by the propulsion system controller, whether a lubricant pump of the plurality of lubricant pumps has failed; and in response to determining that a lubricant pump has failed, controlling, by the propulsion system controller, a valve of the propulsion system to redirect a lubricant circuit associated with the failed lubricant pump to provide lubricant to the corresponding lubricated component.

According to another aspect of the present disclosure, a propulsion system controller may include pump control logic to receive input data indicative of a current operating condition of a propulsion system; determine a plurality of pump control settings based on the current operating condition; and control each of a plurality of lubricant pumps of the propulsion system according to a corresponding pump control setting of the plurality of pump control settings, wherein each of the plurality of lubricant pumps is coupled to a corresponding lubricant circuit of the propulsion system and each lubricant circuit includes a corresponding lubricated component of the propulsion system.

In some embodiments, to receive the input data indicative of the current operating condition of the propulsion system may include to receive input data indicative of a lubricant flow rate, a lubricant pressure, or a lubricant temperature of the propulsion system. In some embodiments, to receive the input data indicative of the current operating condition of the propulsion system may include to receive input data indicative of an engine subsystem load or an electrical power generation subsystem load of the propulsion system.

In some embodiments, the pump control logic may be further configured to receive input data indicative of a pre-programmed operating condition of the propulsion system; and determine the plurality of pump control settings based on the pre-programmed operating condition. In some embodiments, to determine the plurality of pump control settings based on the current operating condition may include to determine a pump control setting for a corresponding lubricant pump to achieve a target lubricant flow rate, a target lubricant pressure, or a target lubricant temperature.

In some embodiments, the propulsion system controller may further include pump failure logic to determine whether a lubricant pump of the plurality of lubricant pumps has failed; and, in response to a determination that a lubricant pump has failed, control a valve of the propulsion system to redirect a lubricant circuit associated with the failed lubricant pump to provide lubricant to the corresponding lubricated component.

These and other features of the present disclosure will become more apparent from the following description of the illustrative embodiments.

### BRIEF DESCRIPTION OF THE DRAWINGS

FIG. 1 is a simplified block diagram of at least one embodiment of a propulsion system for a vehicle;
FIG. 2 is a simplified block diagram of at least one embodiment of a lubrication subsystem of the propulsion system of FIG. 1;
FIG. 3 is a simplified block diagram of another embodiment of the lubrication subsystem of the propulsion system of FIG. 1;
FIG. 4 is a simplified flow diagram of at least one embodiment of a method for controlling the lubrication subsystem of FIGS. 1-3; and
FIG. 5 is a simplified block diagram of at least one embodiment of a propulsion system controller of FIGS. 1-3.

For the purposes of promoting an understanding of the principles of the disclosure, reference will now be made to a number of illustrative embodiments illustrated in the drawings and specific language will be used to describe the same.

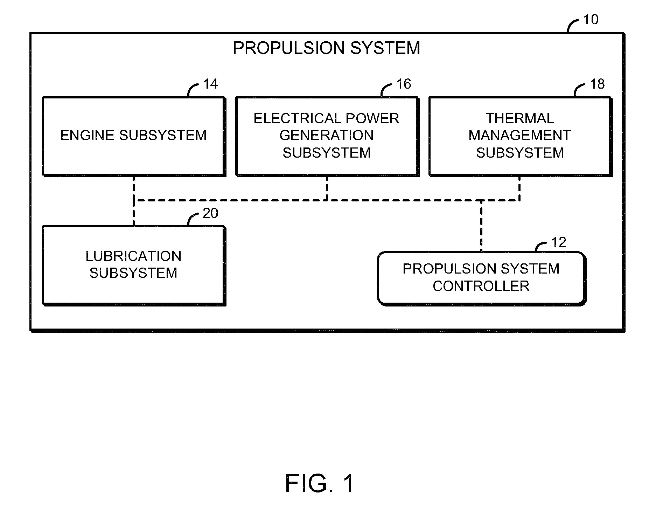

Referring now to FIG. 1, embodiments of a propulsion system 10 adapted to provide thrust or power to a system include a propulsion system controller 12, an engine subsystem 14, an electrical power generation subsystem 16, a thermal management subsystem 18, and a lubrication subsystem 20. The propulsion system controller 12 may be embodied as any microcontroller, microprocessor, embedded system, or other computing device capable of performing the functions described herein. In the illustrative embodiment, in addition to various other control operations, the propulsion system controller 12 electronically controls operation of the lubrication system 20 allowing optimization of the lubrication system 20 function.

The engine subsystem 14 may be adapted to provide thrust or shaft power to an associated vehicle or system (e.g. plane, ship, generator, pump, or the like). The engine subsystem 14 may include a gas turbine engine, including a compressor, a combustor, a turbine, a gearbox, and other components typically included in a gas turbine engine.

The electrical power generation subsystem 16 may include one or more generators, alternators, or other electrical machines capable of converting kinetic and/or thermal energy generated by the engine subsystem 14 into electrical energy. The electrical power generation subsystem 16 may also include power electronics capable of converting or distributing electrical energy to other subsystems of the propulsion system 10 and/or the associated vehicle or system, such as rectifiers, DC-DC converters, or other electronics.

The thermal management subsystem 18 is configured to control the temperature of various components of the propulsion system 10 and/or an associated vehicle or system (e.g. plane, ship, generator, pump, or the like). The thermal management subsystem 18 may include heat exchangers, radiators, or other components capable of controlling the temperature of various components of the propulsion system 10 and/or the associated vehicle or system.

The lubrication subsystem 20, as described further below, distributes a lubricant such as oil to the other subsystems of the propulsion system 10 to provide lubrication and/or thermal management. As described further below, the lubrication subsystem 20 includes several lubricant circuits that each include a distributed electric pump that is controlled by the propulsion system controller 12.

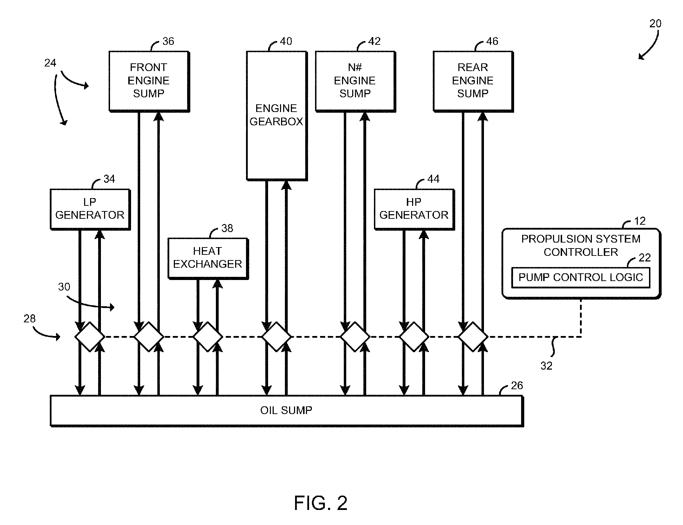

Referring now to FIG. 2, one potential embodiment of the lubrication subsystem 20 is shown. As shown, the illustrative lubrication subsystem 20 includes pump control logic 22 of the propulsion system controller 12, several lubricated components 24, an oil sump 26, and several lubricant pumps 28. The oil sump 26 is a reservoir or other container capable of storing oil or other lubricant. Although illustrated as a single oil sump 26, it should be understood that in some embodiments, the lubrication subsystem 20 may include two or more oil sumps 26.

Each of the lubricated components 24 may be embodied as any component of the propulsion system 10 that uses lubricant supplied by the lubrication subsystem 20, for example for lubrication and/or thermal management purposes. The lubricated components 24 may be included in, coupled with, or otherwise interfaced with other subsystems of the propulsion system 10, such as the engine subsystem 14, the electrical power generation subsystem 16, and the thermal management subsystem 18.

In the illustrative embodiment, the lubricated components 24 include a low-pressure generator 34, a front engine sump 36, a heat exchanger 38, an engine gearbox 40, an intermediate engine sump 42, a high-pressure generator 44, and a rear engine sump 46. The low-pressure generator 34 and the high-pressure generator 44 may be embodied as AC generators or other electrical machines used to convert mechanical energy into electrical energy. The low-pressure generator 34 and the high-pressure generator 44 may be configured to generate power using low-pressure exhaust and high-pressure exhaust of the gas turbine engine, respectively. The generators 34, 44 may be included in the electrical power generation subsystem 16. Although illustrated as including two generators 34, 44, it should be understood that in some embodiments, the electrical power generation subsystem 16 may include one generator or more than two generators.

The front engine sump 36, the engine gearbox 40, the intermediate engine sump 42, and the rear engine sump 46 may be embodied as engine bearing sumps or other components used to provide lubrication to components of the gas turbine engine and/or a transmission coupled to the gas turbine engine. Thus, part or all of the engine sumps 36, 42, 46 and the engine gearbox 40 may be included in the engine subsystem 14. Although illustrated as including three engine bearing sumps 36, 42, 46, it should be understood that in some embodiments the engine subsystem may include any number of engine bearing sumps. Additionally, it should be understood that in some embodiments the engine subsystem 14 may not include an engine gearbox 40.

The heat exchanger 38 may be embodied as any component or components used to transfer heat to or from the oil or other lubricant pumped through the heat exchanger 38. For example, the heat exchanger 38 may be used to remove heat from other components of the gas turbine engine. As another example, the heat exchanger 38 may be used to transfer heat from the lubricant to the fuel of the vehicle or system associated with the propulsion system 10. The heat exchanger 38 may be included in the thermal management subsystem 18. Although illustrated as including a single heat exchanger 38, it should be understood that in some embodiments, the thermal management subsystem 18 may include two or more heat exchangers 38.

Each of the pumps 28 may be embodied as any type of electrical pump capable of pumping oil or other lubricant from the oil sump 26 via a lubricant circuit 30 to a corresponding lubricated component 24. The pumps 28 may be distributed throughout the propulsion system 10. Each of the lubricant circuits 30 may be embodied as any pipe, hose, or other conduit capable of transferring oil or other lubricant from the oil sump 26 to the corresponding lubricated component 24. Each lubricant circuit 30 may include a supply line to provide oil to the lubricated component 24 and a scavenge line to return oil from the lubricated component 24 to the oil sump 26. As shown, each lubricant circuit 30 includes a dedicated lubricant pump 28 and is connected to a single lubricated component 24. In some embodiments, two or more lubricated components 24 may be included in a single lubricant circuit 30.

The pumps 28 are connected to the propulsion system controller 12 by a data bus 32. The data bus 32 may be embodied as any network interface, electrical connection, optical connection, wireless connection, or other control interface capable of transmitting control instructions from the propulsion system controller 12 to the pumps 28. Although illustrated as a data bus 32, it should be understood that in some embodiments the propulsion system controller 12 may be coupled to the pumps 28 using any appropriate communication technology or topology, such as one or more point-to-point communication links.

The pump control logic 22 may be embodied as hardware, firmware, software, or a combination thereof. For example, the pump control logic 22 may form a portion of, or otherwise be established by, a processor or other hardware components of the propulsion system controller 12. As such, in some embodiments, the pump control logic 22 may be embodied as a circuit or collection of electrical devices (e.g., a pump control logic circuit). As described further below, the pump control logic 22 is configured to receive input data indicative of a current operating condition of the propulsion system 10 and determine a plurality of pump control settings based on the current operating condition. The pump control logic 22 is further configured to control each of the lubricant pumps 28 of the propulsion system 10 according to a corresponding pump control setting of the plurality of pump control settings.

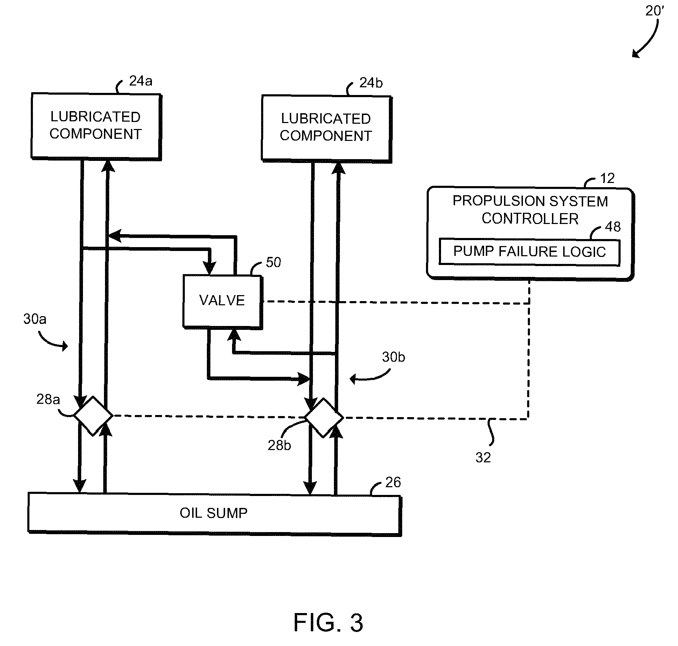

Referring now to FIG. 3, another embodiment of a lubrication subsystem 20' is shown. The illustrative lubrication subsystem 20' includes the oil sump 26 and two lubricant pumps 28a, 28b connected to two lubricant circuits 30a, 30b, respectively. As shown, the lubricant circuits 30a, 30b supply lubricant to two lubricated components 24a, 24b, respectively. The lubrication subsystem 20' further includes a valve 50 connected between the lubricant circuits 30a, 30b. The valve 50 may be embodied as any electrically operable fluid control valve. When opened, the valve 50 allows fluid pumped by the pump 28b to be supplied to the lubricant circuit 30a and thereby be supplied to the lubricated component 24a. Thus, as further described below, the valve 50 may be opened to allow the lubricated component 24a to receive lubricant if the lubricant pump 28a fails. The valve 50 is connected to the data bus 32 and may be controlled by the propulsion system controller 12. Although illustrated as being connected to the data bus 32, it should be understood that the in some embodiments the valve 50 may be connected to the propulsion system controller 12 using any appropriate communication technology or topology, such as one or more point-to-point communication links.

Although illustrated as including two lubricant circuits 30a, 30b connected by a single valve 50, it should be understood that in some embodiments the lubrication subsystem 20 may include multiple valves 50 that may be used to redirect lubricant among the lubricant circuits 30 of the lubrication subsystem 20.

The propulsion system controller 12 further includes pump failure logic 48. The pump failure logic 48 may be embodied as hardware, firmware, software, or a combination thereof. For example, the pump failure logic 48 may form a portion of, or otherwise be established by, a processor or other hardware components of the propulsion system controller 12. As such, in some embodiments, the pump failure logic 48 may be embodied as a circuit or collection of electrical devices (e.g., a pump failure logic circuit). As described further below, the pump failure logic 48 is configured to determine whether a lubricant pump 28 has failed and, in response to a determination that the lubricant pump 28 has failed, control a valve 50 of the propulsion system 10 to redirect a lubricant circuit 30 associated with the failed lubricant pump 28 to provide lubricant to the corresponding lubricated component 24.

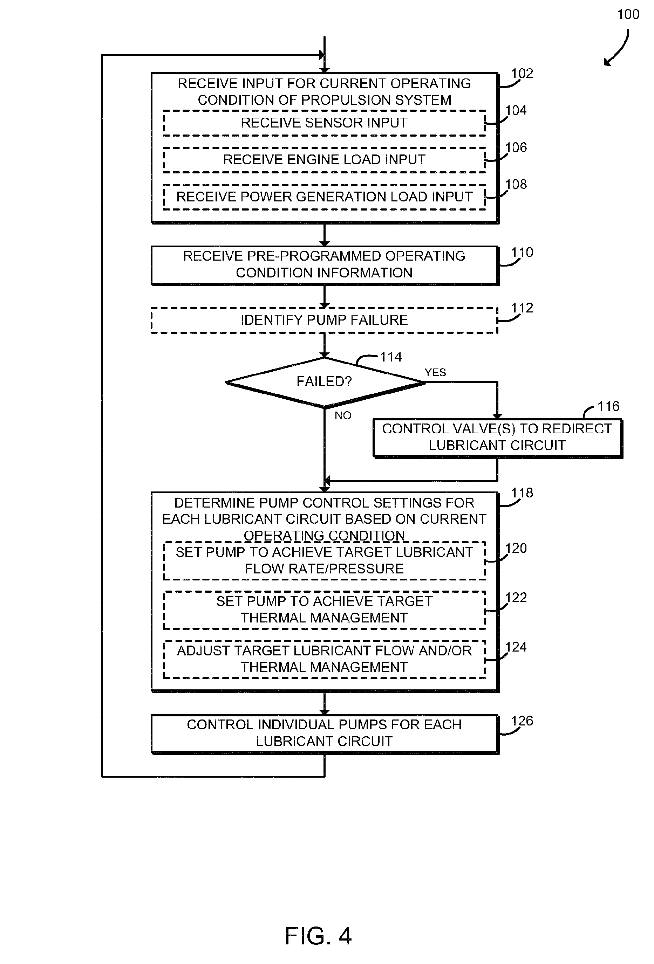

Referring now to FIG. 4, an illustrative method 100 that may be executed by the propulsion system 10 (e.g., by the propulsion system controller 12) is shown. Aspects of the method 100 may be embodied as electrical circuitry, computerized programs, routines, logic, and/or instructions, such as the pump control logic 22 and/or the pump failure logic 48. The illustrative method 100 may be executed by the propulsion system 10 in real time during normal operation of a turbine-engine-powered vehicle/system or in an offline environment (e.g., during propulsion system testing or aircraft maintenance).

The method 100 begins in block 102, in which the propulsion system controller 12 receives input indicative of a current operating condition of the propulsion system 10. In some embodiments, in block 104 the propulsion system controller 12 may receive input data from one or more sensors of the propulsion system 10. For example, the propulsion system controller 12 may receive sensor data indicative of lubricant temperature, lubricant pressure, or lubricant flow rate in one or more of the lubricant circuits 30. In some embodiments, in block 106 the propulsion system controller 12 may receive input data indicative of an engine load currently experienced by the engine subsystem 14. For example, when the vehicle powered by the propulsion system 10 is cruising, engine load may be relatively low, and when the vehicle is climbing or performing rapid maneuvers, engine load may be relatively high. The propulsion system controller 12 may determine the engine load data based on engine speed, user control input, or any other appropriate data source.

Similarly, in some embodiments in block 108, the propulsion system controller 12 may receive input data indicative of a power generation load currently experienced by the electrical power generation subsystem 16. For example, the power generation load may indicate the electrical current being consumed by various components of the vehicle. The propulsion system controller 12 may determine the power generation load data based on electrical sensors, user control input, or any other appropriate data source.

In block 110, the propulsion system controller 12 may receive pre-programmed information indicative of the operating condition of the propulsion system 10. The pre-programmed information may be embodied as any data indicative of a predefined operating mode or other predefined function of the propulsion system 10. The predefined operating mode or function may or may not correspond to the current operating condition of the propulsion system 10. For example, the pre-programmed information may indicate that the gas turbine engine will be started soon, or that the gas turbine engine has recently been shut down.

In some embodiments, in block 112 the propulsion system controller 12 may identify whether one or more of the lubricant pumps 28 has failed. The propulsion system controller 12 may use any appropriate technique to determine whether a lubricant pump 28 has failed. For example, the propulsion system controller 12 may monitor the status of the lubricant pumps 28 via the data bus 32. In block 114, the propulsion system controller 12 checks whether any lubricant pump 28 failure has been identified. If not (i.e., if no lubricant pump 28 has failed or if the propulsion system controller 12 does not check for lubricant pump 28 failure), the method 100 advances to block 118. If the propulsion system controller 12 determines that a lubricant pump 28 has failed, the method 100 branches to block 116.

In block 116, the propulsion system controller 12 controls one or more valves 50 of the lubrication subsystem 20 to redirect a lubricant circuit 30 to provide fault tolerance. For example, referring again to FIG. 3, if the propulsion system controller 12 detects that the lubricant pump 28a has failed, the propulsion system controller 12 may open the valve 50. As described above, after the valve 50 is opened, the lubricant pump 28b may supply lubricant to both lubricant circuits 30a, 30b and thus supply lubricant to both lubricated components 24a, 24b. Therefore, the propulsion system controller 12 may allow the propulsion system 10 to continue operating in response to a pump failure. After controlling one or more of the valves 50, the method 100 advances to block 118.

In block 118, the propulsion system controller 12 determines pump control settings for the lubricant pump 28 of each lubricant circuit 30 based on the current operating condition of the propulsion system 10. The pump control settings may be embodied as any power setting, speed setting, or other operating parameter of a lubricant pump 28 that controls the flow rate and/or pressure of the lubricant delivered by the lubricant pump 28. For example, the pump control setting may be embodied as the amount of electrical current to be supplied to each lubricant pump 28. The propulsion system controller 12 may use any appropriate control algorithm to determine pump settings individually for each lubricant pump 28. In other words, the propulsion system controller 12 may determine different pump settings for each of the lubricant pumps 28.

In some embodiments, in block 120 the propulsion system controller 12 may set a lubricant pump 28 to achieve a target lubricant flow rate and/or pressure. For example, the propulsion system controller 12 may dynamically control a pump 28 that supplies lubricant to an engine bearing or an electrical generator, providing additional lubrication when required during flight. In some embodiments, in block 122 the propulsion system controller 12 may set a lubricant pump 28 to achieve a target level of thermal management. For example, the propulsion system controller 12 may dynamically control a pump 28 that supplies lubricant to the heat exchanger 38 to ensure that the lubricant remains at the desired temperature. Thus, the propulsion system controller 12 may dynamically control thermal management provided to the systems of the propulsion system 10, including the gas turbine engine, the electrical power generators, the power electronics, and other components.

In some embodiments, in block 124 the propulsion system controller 12 may adjust the target lubricant flow rate, the target lubricant pressure, and/or the target thermal management level. For example, when engine load and/or power generation load is increased, the propulsion system controller 12 may increase the target lubricant flow rate and/or pressure, and may increase the target thermal management level. As another example, when the propulsion system controller 12 detects that a lubricant pump 28 has failed (as described above in connection with blocks 112 through 116), the propulsion system controller 12 may increase the target lubricant flow rate and/or pressure for one or more of the remaining, operable lubricant pumps 28.

Additionally or alternatively, the propulsion system controller 12 may adjust the target lubricant flow rate, the target lubricant pressure, and/or the target thermal management based on a pre-programmed operating condition. Continuing that example, the propulsion system controller 12 may set the target lubricant flow and/or the target thermal management to cycle oil through the components of the propulsion system 10 prior to starting the gas turbine engine. As another example, the propulsion system controller 12 may set the target lubricant flow and/or the target thermal management to continue to provide oil to the heat exchanger 38 and/or other components of the propulsion system 10 after the gas turbine engine has been shut down, which may remove excess heat from the propulsion system 10.

In block 126, the propulsion system controller 12 controls the individual lubricant pumps 28 for each lubricant circuit 30 according to the pump control settings previously determined. For example, the propulsion system controller 12 may activate or deactivate various lubricant pumps 28, and in some embodiments the propulsion system controller 12 may adjust the speed or other operating parameters of various lubricant pumps 28. The propulsion system controller 12 may use any appropriate technique to control the lubricant pumps 28. For example, the propulsion system controller 12 may transmit one or more commands to each of the lubricant pumps 28 via the data bus 32. As another example, the propulsion system controller 12 may adjust the amount of electrical power delivered to each of the lubricant pumps 28. After controlling the lubricant pumps 28, the method 100 loops back to block 102 to continue controlling the lubrication subsystem 20.

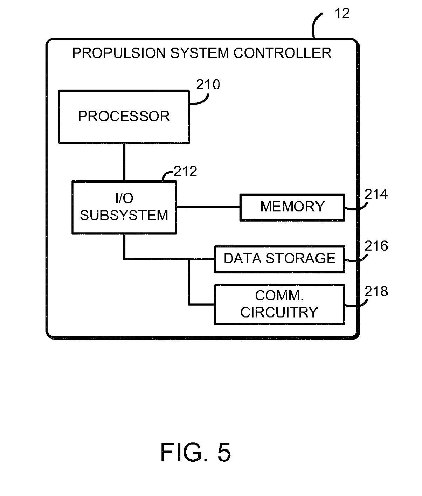

Referring now to FIG. 5, an embodiment of the propulsion system controller 12 is shown. The illustrative propulsion system controller 12 is embodied as one or more computing devices, which may include one or more controllers or processors (e.g., microcontrollers, microprocessors, digital signal processors, field-programmable gate arrays (FPGAs), programmable logic arrays (PLAs), etc.), and/or other electrical circuitry. The propulsion system controller 12 includes hardware, firmware, and/or software components that are capable of performing the functions disclosed herein, including the functions of the pump control logic 22 and/or the pump failure logic 48. The propulsion system controller 12 may be in communication with one or more other devices (such as one or more embedded controllers) by one or more communication networks (not shown), in order to perform one or more of the disclosed functions.

The illustrative propulsion system controller 12 includes at least one processor 210, an input/output (I/O) subsystem 212, and a memory 214. The I/O subsystem 212 typically includes, among other things, an I/O controller, a memory controller, and one or more I/O ports, although not specifically shown. The processor 210 and the I/O subsystem 212 are communicatively coupled to the memory 214. The memory 214 may be embodied as any type of suitable computer memory device (e.g., volatile memory such as various forms of random access memory). The I/O subsystem 212 is communicatively coupled to a number of hardware and/or software components, including a data storage device 216 and communication circuitry 218.

The data storage device 216 may include one or more hard drives or other suitable persistent data storage devices (e.g., flash memory, memory cards, memory sticks, read-only memory devices, and/or others). Information about the different operating conditions of the propulsion system 10, and/or any other data needed by the propulsion system 10 (e.g., the pump control logic 22 and/or the pump failure logic 48) may be stored in the data storage device 216. Portions of the pump control logic 22 and/or the pump failure logic 48 may be copied to the memory 214 during operation of the propulsion system 10, for faster processing or other reasons. The pump control logic 22 and the pump failure logic 48 are embodied as one or more computer-executable components and/or data structures (e.g., computer hardware, firmware, software, or a combination thereof). Particular aspects of the methods that may be performed by the pump control logic 22 and/or the pump failure logic 48 may vary depending on the requirements of a particular design of the propulsion system 10. Accordingly, the examples described herein are illustrative and intended to be non-limiting.

The communication circuitry 218 may communicatively couple the propulsion system controller 12 to one or more other devices, systems, or communication networks, e.g., a vehicle area network, controller area network, local area network, and/or wide area network, for example. Accordingly, the communication circuitry 218 may include one or more wired or wireless network interface software, firmware, or hardware, for example, as may be needed pursuant to the specifications and/or design of the particular propulsion system 10. Further, the propulsion system controller 12 may include other components, sub-components, and devices not illustrated herein for clarity of the description. In general, the components of the propulsion system controller 12 are communicatively coupled as shown in FIG. 5 by electronic signal paths, which may be embodied as any type of wired or wireless signal paths capable of facilitating communication between the respective devices and components.

In the foregoing description, numerous specific details, examples, and scenarios are set forth in order to provide a more thorough understanding of the present disclosure. It will be appreciated, however, that embodiments of the disclosure may be practiced without such specific details. Further, such examples and scenarios are provided for illustration, and are not intended to limit the disclosure in any way. Those of ordinary skill in the art, with the included descriptions, should be able to implement appropriate functionality without undue experimentation.

References in the specification to "an embodiment," etc., indicate that the embodiment described may include a particular feature, structure, or characteristic, but every embodiment may not necessarily include the particular feature, structure, or characteristic. Such phrases are not necessarily referring to the same embodiment. Further, when a particular feature, structure, or characteristic is described in connection with an embodiment, it is believed to be within the knowledge of one skilled in the art to effect such feature, structure, or characteristic in connection with other embodiments whether or not explicitly indicated.

Embodiments in accordance with the disclosure may be implemented in hardware, firmware, software, or any combination thereof. Embodiments may also be implemented as instructions stored using one or more machine-readable media, which may be read and executed by one or more processors. A machine-readable medium may include any mechanism for storing or transmitting information in a form readable by a machine. For example, a machine-readable medium may include any suitable form of volatile or non-volatile memory.

Modules, data structures, and the like defined herein are defined as such for ease of discussion, and are not intended to imply that any specific implementation details are required. For example, any of the described modules and/or data structures may be combined or divided into sub-modules, sub-processes or other units of computer code or data as may be required by a particular design or implementation.

In the drawings, specific arrangements or orderings of schematic elements may be shown for ease of description. However, the specific ordering or arrangement of such elements is not meant to imply that a particular order or sequence of processing, or separation of processes, is required in all embodiments. In general, schematic elements used to represent instruction blocks or modules may be implemented using any suitable form of machine-readable instruction, and each such instruction may be implemented using any suitable programming language, library, application programming interface (API), and/or other software development tools or frameworks. Similarly, schematic elements used to represent data or information may be implemented using any suitable electronic arrangement or data structure. Further, some connections, relationships, or associations between elements may be simplified or not shown in the drawings so as not to obscure the disclosure.

While the disclosure has been illustrated and described in detail in the foregoing drawings and description, the same is to be considered as exemplary and not restrictive in character, it being understood that only illustrative embodiments thereof have been shown and described and that all changes and modifications that come within the spirit of the disclosure are desired to be protected.

## Claims

1. A gas turbine engine propulsion system comprising:
a plurality of lubricant pumps;
a plurality of lubricant circuits, wherein each of the plurality of lubricant circuits includes a corresponding lubricated component of the propulsion system and is coupled to a corresponding lubricant pump; and
a propulsion system controller configured to (i) receive input data indicative of a current operating condition of the propulsion system; (ii) determine a plurality of pump control settings based on the current operating condition; and (iii) control each of the plurality of lubricant pumps according to a corresponding pump control setting of the plurality of pump control settings.

2. The propulsion system of claim 1, wherein the input data indicative of the current operating condition of the propulsion system comprises input data indicative of a lubricant flow rate, a lubricant pressure, a lubricant temperature, an engine subsystem load or an electrical power generation subsystem load of the propulsion system.

3. The propulsion system of claim 1 or claim 2, further comprising a gas turbine engine bearing, wherein a corresponding lubricated component of the propulsion system comprises the gas turbine engine bearing, and the propulsion system may comprise a heat exchanger, wherein a corresponding lubricated component of the propulsion system comprises the heat exchanger.

4. The propulsion system of any of the preceding claims, wherein the propulsion system control is further configured to:
receive input data indicative of a pre-programmed operating condition of the propulsion system; and
determine the plurality of pump control settings based on the pre-programmed operating condition.

5. The propulsion system of any of the preceding claims, wherein to determine the plurality of pump control settings based on the current operating condition, the propulsion system controller is configured to determine a pump control setting for a corresponding lubricant pump to achieve a target lubricant flow rate, a target lubricant pressure, or a target lubricant temperature.

6. The propulsion system of any of the preceding claims, wherein the propulsion system controller is further configured to:
determine whether a lubricant pump of the plurality of lubricant pumps has failed; and
in response to a determination that a lubricant pump has failed, control a valve of the propulsion system to redirect a lubricant circuit associated with the failed lubricant pump to provide lubricant to the corresponding lubricated component.

7. A method for controlling a lubrication subsystem of a gas turbine engine propulsion system, the method comprising:
receiving, by a propulsion system controller, input data indicative of a current operating condition of the propulsion system;
determining, by the propulsion system controller, a plurality of pump control settings based on the current operating condition; and
controlling, by the propulsion system controller, each of a plurality of lubricant pumps of the propulsion system according to a corresponding pump control setting of the plurality of pump control settings, wherein each of the plurality of lubricant pumps is coupled to a corresponding lubricant circuit of the propulsion system and each lubricant circuit includes a corresponding lubricated component of the propulsion system.

8. The method of claim 7, wherein receiving the input data indicative of the current operating condition of the propulsion system comprises receiving input data indicative of a lubricant flow rate, a lubricant pressure, a lubricant temperature, an engine subsystem load or an electrical power generation subsystem load of the propulsion system.

9. The method of claim 7 or claim 8, further comprising:
receiving, by the propulsion system controller, input data indicative of a pre-programmed operating condition of the propulsion system; and
determining, by the propulsion system controller, the plurality of pump control settings based on the pre-programmed operating condition.

10. The method of any of claims 7 to 9, wherein determining the plurality of pump control settings based on the current operating condition comprises determining a pump control setting for a corresponding lubricant pump to achieve a target lubricant flow rate, a target lubricant pressure, or a target lubricant temperature.

11. The method of any of claims 7 to 10, further comprising:
determining, by the propulsion system controller, whether a lubricant pump of the plurality of lubricant pumps has failed; and
in response to determining that a lubricant pump has failed, controlling, by the propulsion system controller, a valve of the propulsion system to redirect a lubricant circuit associated with the failed lubricant pump to provide lubricant to the corresponding lubricated component.

12. A propulsion system controller comprising pump control logic to:
receive input data indicative of a current operating condition of a propulsion system;
determine a plurality of pump control settings based on the current operating condition; and
control each of a plurality of lubricant pumps of the propulsion system according to a corresponding pump control setting of the plurality of pump control settings, wherein each of the plurality of lubricant pumps is coupled to a corresponding lubricant circuit of the propulsion system and each lubricant circuit includes a corresponding lubricated component of the propulsion system.

13. The propulsion system controller of claim 12, wherein to receive the input data indicative of the current operating condition of the propulsion system, the controller is configured to receive input data indicative of a lubricant flow rate, a lubricant pressure, a lubricant temperature,.
an engine subsystem load or an electrical power generation subsystem load of the propulsion system.

14. The propulsion system controller of claim 12 or claim 13, wherein the pump control logic is further configured to:
receive input data indicative of a pre-programmed operating condition of the propulsion system; and
determine the plurality of pump control settings based on the pre-programmed operating condition.

15. The propulsion system controller of any of claims 12 to 14, wherein to determine the plurality of pump control settings based on the current operating condition the controller is configured to determine a pump control setting for a corresponding lubricant pump to achieve a target lubricant flow rate, a target lubricant pressure, or a target lubricant temperature.

16. The propulsion system controller of any of claims 12 to 15, further comprising pump failure logic configured to:
determine whether a lubricant pump of the plurality of lubricant pumps has failed; and
in response to a determination that a lubricant pump has failed, control a valve of the propulsion system to redirect a lubricant circuit associated with the failed lubricant pump to provide lubricant to the corresponding lubricated component.
